Europäisches Patentamt

European Patent Office

Office européen des brevets

(19)

(11) Veröffentlichungsnummer: **0 070 028**
**B1**

(12) # EUROPÄISCHE PATENTSCHRIFT

(45) Veröffentlichungstag der Patentschrift:
**23.10.85**

(21) Anmeldenummer: **82106238.7**

(22) Anmeldetag: **13.07.82**

(51) Int. Cl.⁴: **B 62 B 3/00,** G 07 F 7/06

(54) **Sicherung an Einkaufswagen, Kofferkulis und ähnlichen Einrichtungen.**

(30) Priorität: **15.07.81 DE 3127940**

(43) Veröffentlichungstag der Anmeldung:
**19.01.83 Patentblatt 83/3**

(45) Bekanntmachung des Hinweises auf die Patenterteilung:
**23.10.85 Patentblatt 85/43**

(84) Benannte Vertragsstaaten:
**AT BE CH FR GB IT LI LU NL SE**

(56) Entgegenhaltungen:
**DE - A - 2 554 916**
**DE - A - 2 725 530**
**DE - A - 2 820 112**
**DE - A - 2 900 367**
**US - A - 3 652 103**

(73) Patentinhaber: **Fuchs, Peter, Hohenzollernstrasse 28,
D-7500 Karlsruhe (DE)**

(72) Erfinder: **Fuchs, Peter, Hohenzollernstrasse 28,
D-7500 Karlsruhe (DE)**

(74) Vertreter: **Geitz, Heinrich, Dr.-Ing.,
Postfach 2708 Kaiserstrasse 156,
D-7500 Karlsruhe 1 (DE)**

**Beschreibung**

Die Erfindung bezieht sich gemäß dem Oberbegriff des Anspruchs 1 auf eine Einrichtung zum Sichern von bestimmungsgemäß einzeln zu verwendeten und bei Nichtgebrauch in platzsparender Stapelposition zu einer Batterie zusammenstellbaren Transportwagen, wie Einkaufswagen, Kofferkulis od. dgl., mit einer entriegelbaren Kupplung zum festen, jedoch wahlweise lösbaren Verbinden jeweils in der Stapelposition aneinandergrenzenden Transportwagen, die aus einer Kupplungsmuffe und einem damit kuppelbaren Kupplungsstecker mit einem in der Kupplungslage eine feste, jedoch lösbare Verbindung des Kupplungssteckers mit einer Kupplungsmuffe vermittelnden Verrastungselement besteht und eine Entriegelungssperre besitzt, die nur durch ein besonderes Entriegelungsmittel entriegelbar ist, welches Entriegelungsmittel arretiert ist, wenn Kupplungsstecker und Kupplungsmuffe getrennt sind, und erst beim erneuten Einkuppeln des Kupplungssteckers in eine Kupplungsmuffe wieder freigegeben wird, wobei an jedem Transportwagen je ein Kupplungsstecker und eine Kupplungsmuffe in der Weise fest angeordnet sind, daß beim Zusammenstellen der Transportwagen zur Stapelposition ein jeweils an dem einen Transportwagen befestigter Kupplungsstecker in eine Kupplungsanlage mit der an dem dann benachbarten Transportwagen befestigten Kupplungsmuffe gelangt.

Aus den deutschen Offenlegungsschriften 25 54 916 und 29 00 367 sind bereits derartige Sicherungen zum Aneinanderkuppeln von Einkaufswagen oder Kofferkulis, die nachstehend summarisch als Transportwagen bezeichnet werden, in einer platzsparenden Stapelposition bekannt, bei denen jeweils ein an einem Transportwagen befestigter Kupplungsstecker mit einer an einem in der Stapelposition davor stehenden Transportwagen angeordneten Kupplungsmuffe gekuppelt wird und das Entkuppeln nur nach Einwurf einer Münze in eine Entriegelungssperre des in Fahrtrichtung hinten stehenden Transportwagens gelingt, um diesen bestimmungsmäßig frei beweglich verwenden zu können. Die zum Entkuppeln eingeworfene Münze ist dann bei dem abgekuppelten Transportwagen arretiert und wird erst beim Wiederankuppeln dieses Transportwagens an einen anderen Transportwagen oder einen fest installierten Kupplungsständer wieder freigegeben. Dadurch soll erreicht werden, daß die Transportwagen nach dem Gebrauch von ihren Benutzer nicht einfach beliebig irgendwo, etwa auf Parkplätzen stehen gelassen, sondern zu vorbestimmten Abstellplätzen zurückgebracht und dort mit anderen abgestellten Transportwagen zusammengekuppelt werden.

Bei den vorbekannten Systemen erfolgt die Freigabe der zum Entkuppeln eines Transportwagens eingeworfenen Münze immer dann, wenn ein Wagen an einen ortsfesten Kupplungsständer oder einen anderen Transportwagen angekuppelt wird. Der angestrebte Erfolg ist somit abhängig davon, ob jeder Benutzer seinen Transportwagen an einen der bestimmungsgemäßen Abstellplätze zurückbringt und dort ankuppelt. Wenn hingegen, was nicht ausgeschlossen werden kann, der eine oder andere Benutzer auf die Rückgabe der von ihm zum Abkuppeln eines Transportwagens eingeworfenen Münze verzichtet und diesen Transportwagen an beliebiger Stelle stehen läßt, kann jeder weitere Transportwagen an diesen nicht ordnungsgemäß abgestellten Transportwagen unter Freigabe der jeweils beim Abkuppeln eingeworfenen Münze angekuppelt werden. Damit ist das angestrebte Ordnungssystem gestört.

Die Erfindung geht demgegenüber von der Überlegung aus, daß nur dann eine Störung beim Betrieb derartiger Einkaufswagen vermieden werden kann, wenn im Falle des Ankuppelns eines benutzten Einkaufswagens an einen herumvagabundierenden, nicht ordnungsgemäß eingeparkten Einkaufswagen das zum Entkuppeln zuvor eingesetzte Entriegelungsmittel, bei dem es sich neben einer Münze auch um einen gegen Hinterlegung eines bestimmten Geldbetrages erhältlichen Jeton oder einen Schlüssel handeln kann, nicht freigegeben wird. Demgemäß besteht die der Erfindung zugrundeliegende Aufgabe in der Schaffung einer Sicherung für Einkaufswagen, Kofferkulis od. ähnliche Transportwagen, bei der die Freigabe des zum Entkuppeln notwendigen Entriegelungsmittels nur nach vorherigem Ankuppeln des benutzten Transportwagens an einen Parkständer oder einen anderen in einer vorbestimmten Parkstation ordnungsgemäß abgestellten und angekuppelten Transportwagen erfolgt.

Diese Aufgabe ist bei einer Einrichtung der eingangs angegebenen Art dadurch gelöst, daß gemäß dem kennzeichnenden Teil des Anspruchs 1 die Kupplungsstecker und Kupplungsmuffen mit Kontakten versehen sind, die beim Einkuppeln eines an einem Transportwagen angeordneten Kupplungssteckers in eine an einem anderen Transportwagen angeordnete Kupplungsmuffe die Einrichtung an ein Schwachstromnetz anlegen, wobei der jeweils erste einer Anzahl in platzsparender Stapelposition abgestellter und aneinandergekuppelter Transportwagen über die an diesem angeordnete Kupplungsmuffe oder den Kupplungsstecker an das Schwachstromnetz angeschlossen ist, und daß die Freigabe des besonderen Entriegelungsmittels nach dem Ankuppeln eines Transportwagens an einen anderen in der Stapelposition stehenden Transportwagen sowie die Betätigung des Verrastungselements und/oder eines letzteres in der Verrastungslage sichernden Sperriegels aus der Verrastungsstellung elektromagnetisch erfolgen.

Kennzeichnend für die Erfindung ist mithin, daß ein Benutzer das beim Abkuppeln eines Transportwagens eingesetzte Entriegelungsmittel, etwa eine Münze, nur dann wiedererlangt, wenn er nach der Benutzung den Transportwagen ordnungsgemäß an einen für die Verwahrung der Transportwagen vorbestimmten Abstellplatz zurückbringt und dort durch Ankuppeln an bereits abgestellte Transportwagen oder an einen Parkständer an das für den Betrieb der Einrichtung notwendige Schwachstromnetz anlegt. Damit ist die Möglichkeit der Wiedererlangung des eingesetzten Entriegelungsmittels infolge Ankuppelns eines benutzten Transportwagens an einen herumvagabundierenden, etwa ordnungswidrig auf einem Parkplatz abgestellten, Transportwagen ausgeschlossen. Ein weiterer wichtiger Vorteil der erfindungsgemäßen Einrichtung besteht darin, daß Transportwagen nur dann von anderen in der Stapelposition stehenden Transportwagen abkuppelbar sind, wenn die Sicherungen dieser Transportwagen an dem Schwachstromnetz anliegen. Demgemäß können außerhalb der für die Benutzung vorgesehenen Zeiten die in der Stapelposition abgestellten Transportwagen gegen unerwünschtes Abkuppeln gesichert werden, indem über einen Hauptschalter das anliegende Schwachstromnetz unterbrochen wird.

Eine zweckmäßige Ausgestaltung der Erfindung ist dadurch gekennzeichnet, daß das besondere Entriegelungsmittel bis zum Ankuppeln des jeweiligen Transportwagens an die Kupplungsmuffe eines in der platzsparenden Stapelposition stehenden und dort angekuppelten Transportwagens mittels einer durch Federkraft in Arretierungslage gehaltenen Sperre arretiert ist und daß diese Sperre infolge Beaufschlagung eines Magnetschalters mit einem Spannungsimpuls beim Ankuppeln des Transportwagens gegen die Wirkung der Federkraft kurzzeitig aus der Arretierungslage in eine das Durchfallen des Entriegelungsmittels ermöglichende Freigabestellung gelangt, um unmittelbar danach unter der Wirkung der Federkraft wieder in die Arretierungslage zurückzukehren. Demgemäß ist unverzüglich nach der durch das ordnungsgemäße Ankuppeln eines Transportwagens in der Stapelposition bedingten Freigabe des zum Abkuppeln dieses Transportwagens zuvor eingesetzten Entriegelungsmittels der Transportwagen für eine erneute Benutzung betriebsbereit.

Eine andere Ausgestaltung sieht vor, daß die Betätigung des Verrastungselements und/oder eines letzteres in der Verrastungslage sichernden Sperriegels aus einer Verrastungs- bzw. Verriegelungslage in eine ein Entkuppeln der Kupplungsteile ermöglichende Entriegelungsstellung mittels eines Betätigungsmagneten erfolgt, der durch das Schließen eines Schalters mittels des besonderen Entriegelungsmittels an Spannung angelegt und dadurch betätigt wird. Durch diese Maßnahme ist sichergestellt, das durch das ordnungsgemäße Ankuppeln eines Transportwagens an einen in der Stapelposition stehenden Transportwagen oder einen Parkständer und das dadurch bedingte Anlegen der Sicherungseinrichtung dieses Transportwagens an das Schwachstromnetz Betriebsbereitschaft besteht, daß aber das Entkuppeln nur durch den Einsatz des besonderen Entriegelungsmittels gelingt, indem letzteres einen Schalter in Schließlage bringt und dadurch der Betätigungsmagnet zum Betätigen des Verrastungselementes und/oder des letzteren in der Verrastungslage sichernden Sperrsignals an Spannung gelegt wird.

Das Verrastungselement kann dabei ein quer zur Längsachse des Kupplungssteckers bewegbarer Verrastungszapfen sein, der in der Kupplungsanlage in eine entsprechende Verrastungsausnehmung der Kupplungsmuffe eingreift und mittels einer vorgespannten Feder in dieser Eingriffslage gehalten sowie durch den Sperriegel in der Weise gesichert ist, daß letzterer den Verrastungszapfen in der Verriegelungslage hintergreift und nur mittels des Betätigungsmagneten in die Entriegelungsstellung betätigbar ist.

Als zweckmäßig hat sich bei der erfindungsgemäßen Einrichtung erwiesen, wenn an jedem Transportwagen ein sich in Fahrtrichtung nach vorn erstreckender Kupplungsstecker und eine nach rückwärts geöffnete Kupplungsmuffe angeordnet sind, so daß beim Zusammenschieben der Transportwagen in die platzsparende Stapelposition jeweils der Kupplungsstecker eines in der Reihe folgenden Transportwagens in Eingriffslage mit der Kupplungsmuffe des davor stehenden Wagens gelangt.

Anhand der Zeichnung soll nachstehend eine Ausführungsform der Erfindung erläutert werden. In schematischen Ansichten zeigt

Fig. 1 mehrere in Stapelposition zu einer Batterie zusammengeschobene und aneinandergekuppelte Einkaufswagen in Parkstellung,

Fig. 2 in einer Ausschnittansicht gemäß II aus Fig. 1 die Sicherungseinrichtungen für sich allein, wobei jeweils das Steckerteil einer Sicherungseinrichtung mit dem Muffenteil einer Sicherungseinrichtung eines benachbarten Einkaufswagens gekuppelt ist,

Fig. 3 das Zusammenwirken eines Steckerteils und eines Muffenteils in einer Längsschnittansicht durch diese Teile und

Fig. 4 eine Prinzipskizze einer Sicherungseinrichtung in ihrer Gesamtheit.

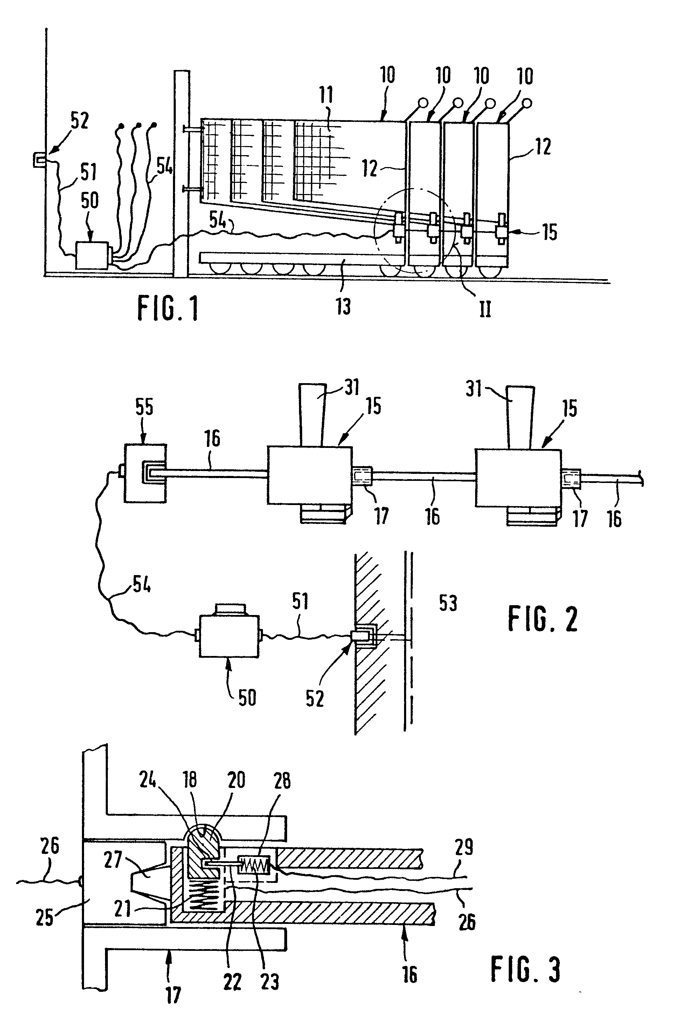

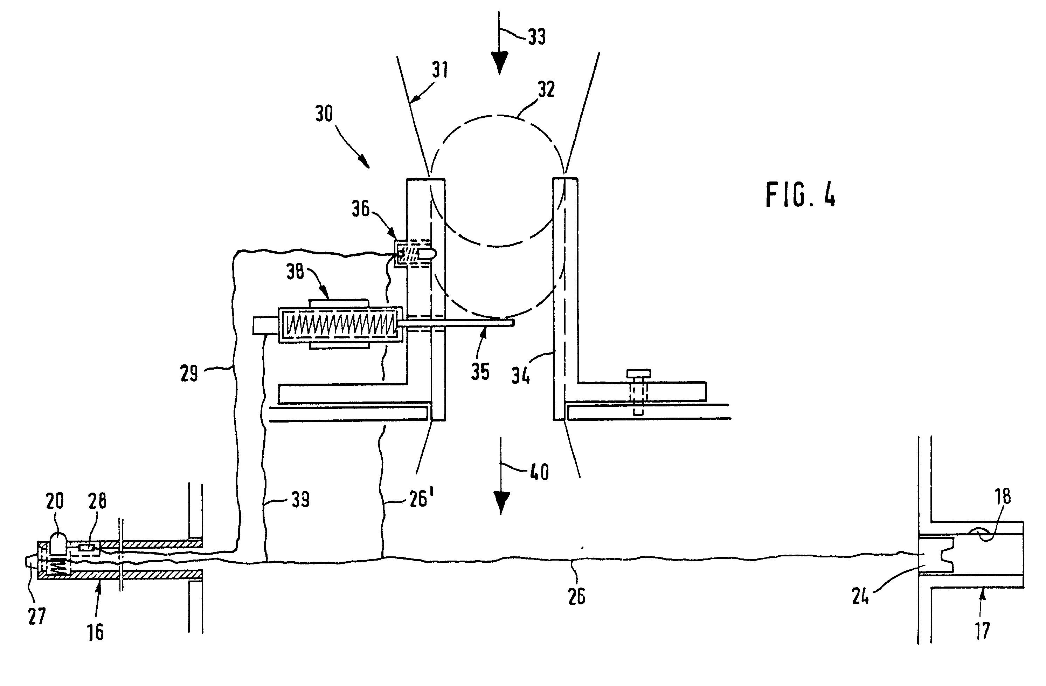

Bei dem aus Fig. 1 ersichtlichen Einkaufswagen 10 tragen die Aufnahmekörbe 11 von vertikal verlaufenden Streben 12 annähernd horizontal aus, die sich ihrerseits von einem Grundrahmen 13 mit dem hier nicht weiter interessierenden Fahrwerk nach oben forterstrecken. An diesen vertikalen Streben 12 sind auf jeweils gleichen Seiten der Einkaufswagen in ihrer Gesamtheit mit 15 bezeichnete Sicherungseinrichtungen angeordnet, die je einen Steckerteil 16 und einen Muffenteil 17 sowie noch in Verbindung mit Fig. 4 näher zu erläuternde Mittel umfassen.

Wie insbesondere Fig. 3 zeigt, besitzt die Kupplungsmuffe 17 eine sich von der Aufnahme für das Steckerteil 16 radial forterstreckende Verrastungsausnehmung 18, in die im eingekuppelten Zustand des Steckerteils ein in der Nähe vom Steckerende quer zu dessen Längserstrekkung bewegbarer Verrastungszapfen 20 eingreift, der sich an einer vorgespannten Druckfeder 21 abstützt und von dieser in Eingriffslage mit der Verrastungsausnehmung 18 in der Kupplungsmuffe 17 gehalten ist. Zum Arretieren des Verrastungszapfens 20 dient ein Sperriegel 22, der in Längsrichtung des Steckerteils bewegbar ist und ebenfalls mittels einer vorgespannten Feder 23 in Eingriffslage mit einer entsprechenden Ausnehmung 24 im Verrastungszapfen 20 gehalten ist. Im übrigen ist die Kupplungsmuffe mit einem Kontaktstück 25 ausgerüstet, welches in unten noch zu beschreibender Weise mittels einer Leitung 26 an Spannung liegt, wenn ein mit einer derartigen Sicherungseinrichtung ausgerüsteter Einkaufswagen 10 sich in der aus Fig. 1 ersichtlichen Parkstellung befindet und mit anderen Einkaufswagen zusammengekuppelt ist. Ein in der Kupplungslage mit dem Kontaktstück 25 der Kupplungsmuffe in elektrisch leitendem Kontakt gelangendes Kontaktstück 27 ist auch am freien Ende des Steckerteils angeordnet und von diesem Kontaktstück 27 erstreckt sich eine Leitung 26 zu dem entsprechenden Kontaktstück 25 derjenigen Sicherungseinrichtung, zu der das Steckerteil 16 gehört. Dem Sperriegel 22 ist ein nur schematisch angedeuteter Betätigungsmagnet 28 zugeordnet, von dem sich eine Versorgungsleitung 29 forterstreckt, was nachstehend in Verbindung mit Fig. 4 erläutert werden soll.

Die Einrichtung 15 mit den beiden Kupplungsteilen 16, 17 umfaßt auch eine in ihrer Gesamtheit mit 30 bezeichnete Steuereinheit mit einem Einwurfschacht 31 für nur schematisch angedeutete Münzen 32. Wenn ein mit einer derartigen Sicherungseinrichtung 15 ausgerüsteter Einkaufswagen gemäß Fig. 1 mit anderen Einkaufswagen in der platzsparenden Stapelposition gekuppelt ist, bedarf es zum Entkuppeln des Einwurfs einer Münze 32 in den Schacht 31, was der Pfeil 33 andeutet. Die unter Schwerkraft zwischen Führungsschienen 34 abwärtsgleitende Münze kommt zur Auflage auf einer sich quer durch die Münzführung erstreckenden Sperre 35 und betätigt in dieser Position einen seitlich in den Münzführungsschlitz hineinragenden Schalter 36, wobei ein über eine Leitung 26' mit der Leitung 26 verbundener Kontakt in elektrisch leitende Verbindung mit einem weiteren Kontakt gelangt, der über die Leitung 29 mit dem Betätigungsmagneten 28 für den Sperriegel 22 verbunden ist. Demgemäß wird, wenn die Leitung 26 an Spannung liegt, der Betätigungsmagnet 28 an Spannung gelegt und dadurch der Sperriegel gegen die Wirkung der Feder 23 aus seiner Arretierungslage zurückgezogen. Der mit einem balligen Kopf ausgerüstete und in eine entsprechend gestaltete Verrastungsausnehmung 18 eingreifende Verrastungszapfen kann nunmehr radial aus der Verrastungslage gegen die Wirkung der ihn abstützenden Druckfeder 21 ausweichen, wenn eine axiale Zugkraft auf das Steckerteil aufgebracht wird, was durch Herausziehen des in einer Reihe jeweils letzten Einkaufswagens aus der Stapelposition regelmäßig der Fall ist.

Danach steht der Einkaufswagen zur bestimmungsgemäßen Verwendung zur Verfügung. Die eingeworfene Münze 32 liegt auf der Sperre 35 auf und ist somit gegen Entnahme gesichert.

Die Freigabe der Münze 32 erfolgt erfindungsgemäß nur, wenn der Einkaufswagen in die Stapelposition zurückgebracht und seine Sicherungseinrichtung mit einer Sicherungseinrichtung des in der Reihe davor befindlichen Einkaufswagens gekuppelt wird.

Beim Einkuppeln des Steckerteils 16 der Sicherungseinrichtung 15 des abzustellenden Einkaufswagens in die Kupplungsmuffe 17 eines bereits abgestellten und gesicherten Einkaufswagens treffen die Kontaktstücke 25, 27 der dann miteinander gekuppelten Kupplungsteile aufeinander, wodurch das System des angekuppelten Wagens an Spannung gelegt wird. Dadurch erfolgt eine impulsartige Spannungsbeaufschlagung eines Magnetschalters 38 über die mit der Leitung 26 verbundene Leitung 39, was ein Zurückziehen der Sperre 35 aus dem Münzführungsschlitz zur Folge hat, so daß diese Münze gemäß Pfeil 40 nach unten durchfällt und in hier nicht weiter interessierender Weise entnommen werden kann. Durch das Durchfallen der Münze aus der den Schalter 36 in Schließlage betätigenden Position gelangt der Schalter 36 in Öffnungsstellung, wodurch der Betätigungsmagnet 28 für den Sperriegel 22 stromlos wird und der Sperriegel unter der Wirkung der ihm beaufschlagenden Feder 23 in die Arretierungsausnehmung 24 des Verrastungszapfens 20 eingreift, der seinerseits zuvor beim Einkuppeln schon unter der Wirkung der Druckfeder 21 in die aus Fig. 3 ersichtliche Eingriffslage mit der Verrastungsausnehmung 18 der Kupplungsmuffe 17 gelangt war. Nach dem impulsartigen Zurückziehen der Sperre 35 aus der Fig. 4 ersichtlichen Sperrlage gelangt diese, sobald die Münze im Münzführungsschacht 34 nach unten durchgefallen ist, wieder in ihre Ausgangslage, somit der Kupplungs- und Sicherungsvorgang beendet ist und Bereitschaft für neues Entkuppeln durch Einwerfen einer Münze erreicht ist.

In Fig. 1 ist schematisch ein Trafo 50 gezeigt, der eingangsseitig über ein Kabel 51 an einer Steckdose 52 eines in Fig. 2 nur angedeuteten Versorgungsnetzes 53 liegt. Von diesem Trafo erstrecken sich mehrere Niederspannungskabel 54 fort, an deren Enden in der Art von Kupplungsmuffen ausgebildete Kontaktmuffen 56 angeordnet sind. Die Fig. 1 und 2 zeigen, daß mit dem Steckerteil 16 der Sicherungseinrichtung 15 des in der Reihe vordersten Einkaufswagens 10 eine derartige Kontaktmuffe 55 verbunden ist, welche den Anschluß der Sicherungseinrichtung an die vom Trafo bereitgestellte Versorgungsspannung vermittelt. In der vorstehend erläuterten Weise sind dann die weiteren in der Reihe angekuppelten Einkaufswagen über die genannten Kontaktstücke 25, 27 der Kupplungsmuffen und Steckerteile an Betriebsspannung angelegt. Es versteht sich von selbst, daß eine derartige Kontaktmuffe 55 auch als ortsfeste Kontaktstelle an einem vorbestimmten Abstellplatz für Einkaufswagen ausgebildet sein kann.

**Patentansprüche**

1. Einrichtung zum Sichern von bestimmungsgemäß einzeln zu verwendenden und bei Nichtgebrauch in platzsparender Stapelposition zu einer Batterie zusammenstellbaren Transportwagen (10), wie Einkaufswagen, Kofferkulis od. dgl., mit einer entriegelbaren Kupplung zum festen, jedoch wahlweise lösbaren Verbinden jeweils in der Stapelposition aneinandergrenzender Transportwagen, die aus einer Kupplungsmuffe (17) und einem damit kuppelbaren Kupplungsstecker (16) mit einem in der Kupplungslage eine feste, jedoch lösbare Verbindung des Kupplungssteckers mit einer Kupplungsmuffe vermittelnden Verrastungselement (20) besteht und eine Entriegelungssperre (22, 28) besitzt, die nur durch ein besonderes Entriegelungsmittel (32) entriegelbar ist, welches Entriegelungsmittel arretiert ist, wenn Kupplungsstecker und Kupplungsmuffe getrennt sind und erst beim erneuten Einkuppeln des Kupplungssteckers in eine Kupplungsmuffe wieder freigegeben wird, wobei an jedem Transportwagen je ein Kupplungsstecker und eine Kupplungsmuffe in der Weise fest angeordnet sind, daß beim Zusammenstellung der Transportwagen zur Stapelposition ein jeweils an dem einen Transportwagen befestigter Kupplungsstecker in eine Kupplungslage mit der an dem dann benachbarten Transportwagen befestigten Kupplungsmuffe gelangt, dadurch gekennzeichnet, daß die Kupplungsstecker (16) und Kupplungsmuffen (17) mit Kontakten (25, 27) versehen sind, die beim Einkuppeln eines an einen Transportwagen (10) angeordneten Kupplungssteckers in eine an einem anderen Transportwagen angeordnete Kupplungsmuffe die Einrichtung (15) an ein Schwachstromnetz anlegen, wobei der jeweils erste einer Anzahl in platzsparender Stapelposition abgestellter und aneinandergekuppelter Transportwagen über die an diesem angeordnete Kupplungsmuffe oder den Kupplungsstecker an das Schwachstromnetz angeschlossen ist, und daß die Freigabe des besonderen Entriegelungsmittels (32) nach dem Ankuppeln eines Transportwagens an einen anderen in der Stapelposition stehenden Transportwagen sowie die Betätigung des Verrastungselements (20) und/oder eines letzteres in der Verrastungsanlage sichernden Sperriegels (22) aus der Verrastungslage elektromagnetisch erfolgen.

2. Einrichtung nach Anspruch 1, dadurch gekennzeichnet, daß das besondere Entriegelungsmittel (32) bis zum Ankuppeln des jeweiligen Transportwagens (10) an die Kupplungsmuffe (17) eines in der platzsparenden Stapelposition stehenden und dort angekuppelten Transportwagens mittels einer durch Federkraft in Arretierungslage gehaltenen Sperre (35) arretiert ist und daß diese Sperre infolge Beaufschlagung eines Magnetschalters (38) mit einem Spannungsimpuls beim Ankuppeln des Transportwagens gegen die Wirkung der Federkraft kurzzeitig aus der Arretierungslage in eine das Durchfallen des Entriegelungsmittels ermöglichende Freigabestellung gelangt.

3. Einrichtung nach Anspruch 1 oder 2, dadurch gekennzeichnet, daß die Betätigung des Verrastungselementes (20) und/oder eines letzteres in der Verrastungslage sichernden Sperriegels (22) aus einer Verrastungs- bzw. Verriegelungslage in eine Entkuppeln der Kupplungsteile ermöglichende Entriegelungsstellung mittels eines Betätigungsmagneten (28) erfolgt, der durch das Schließen eines Schalters (36) mittels des besonderen Entriegelungsmittels an Spannung angelegt und dadurch betätigt wird.

4. Einrichtung nach Anspruch 3, dadurch gekennzeichnet, daß das Verrastungselement ein quer zur Längsachse des Kupplungssteckers (16) bewegbarer Verrastungszapfen (20) ist, der in der Kupplungslage in eine entsprechende Verrastungsausnehmung (18) der Kupplungsmuffe (17) eingreift und mittels einer vorgespannten Feder (21) in dieser Eingriffslage gehalten ist, und daß der Sperriegel (22) den bewegbaren Verrastungszapfen in der Verrastungslage hintergreift und nur mittels des Betätigungsmagneten (28) in die Entriegelungsstellung betätigbar ist.

5. Einrichtung nach einem der Ansprüche 1 bis 4, dadurch gekennzeichnet, daß an jedem Transportwagen (10) ein sich in Fahrtrichtung nach vorn erstreckender Kupplungsstecker (16) und eine nach rückwärts geöffnete Kupplungsmuffe (17) angeordnet sind.

**Claims**

1. Equipment for the securing of transport carriages (10), such as shopping trolleys, luggage trolleys or the like, which are according to intention to be used individually and on non-use to be settable together into a battery in space-sacing stacking position, with an unlatchable coupling for the fixed, yet selectably detachable connection of transport carriages respectively adjoining one the other in the stacking position, which equipment consists of a coupling socket (17) and a coupling plug (16), which is couplable therewith and has a detent element (20), which in the coupling position provides a fixed, yet detachable connection of the coupling plug with a coupling socket, and possesses a latching lock (22, 28), which is unlatchable only by a special unlatching means (32) which is constrained when coupling plug and coupling socket are spearated and freed again only on the renewed coupling of the coupling plug into a coupling socket, wherein a coupling plug and a coupling socket are fixedly arranged on each transport carriage in such a manner that, during the setting-together of the transport carriages into the stacking position, a coupling plug respectively fastened at the one transport carriage gets into a coupling position with the coupling socket fastened at the then adjacent transport carriage, characterised thereby, that the coupling plugs (16) and coupling sockets (17) are provided with contacts (25, 27), which on the coupling of a coupling plug arranged at one transport carriage (10) into a coupling socket arranged at another transport carriage apply the equipment (15) to a low-voltage mains, wherein the respective first of a number of transport carriages, which are coupled one against the other and set away in space-saving stacking position, is connected through the coupling socket or the coupling plug arranged at this to the low-voltage mains and that the freeing of the special unlatching means (32) after the coupling of a transport carriage to another transport carriage standing in the stacking position as well as the actuation of the detent element (20) and/or a locking bar (20) securing the latter in the detent position takes place electromagnetically out of the detent position.

2. Equipment according to claim 1, characterised thereby, that the special unlatching means (32) is constrained by means of a lock (35) held by spring force in constraining position until the coupling of the respective transport carriage (10) to the coupling socket (17) of a transport carriage standing in the space-saving stacking position and being coupled on there and that this lock, in consequence of a magnetic switch (38) being acted on by a voltage pulse during the coupling-on of the transport carriage, gets against the action of the spring force briefly out of the constraining position into a freeing position making possible the dropping-through of the unlatching means.

3. Equipment according to claim 1 or 2, characterised thereby, that the actuation, out of a detent or latching position into an unlatching position making possible the uncoupling of the coupling parts, of the detent element (20) and/or al locking bar (20) securing the latter in the detent position takes place by means of an actuating magnet (28), which is applied to voltage through the closing of a switch (36) by means of the special unlatching means and thereby actuated.

4. Equipment according to claim 3, characterised thereby, that the detent element is a detent spigot (20), which is movable transversely to the longitudinal axis of the coupling plug (16), in the coupling position engages into a corresponding detent recess (18) of the coupling socket (17) and which is held in this engaged position by means of a biassed spring (21) and that the locking bar (22) engages behind the movable detent spigot in the detent position and is actuable into the unlatching position only by means of the actuating magnet (28).

5. Equipment according to one of the claims 1 to 4, characterised thereby, that a coupling plug (16) extending forwards in direction of travel and a rearwardly open coupling socket (17) are arranged on each transport carriage (10).

**Revendications**

1. Installation pour mettre en sécurité des chariots de transport (10) tels que des chariots d'achat, des chariots de transport de bagages ou analogues, prévus pour être utilisés séparément et être réunis en une batterie rangée en file, lorsqu'ils ne sont pas utilisés, comportant un moyen de liaison déverrouillable pour relier de façon solidaire, mais amovible, sélectivement, les chariots de transport, respectifs, adjacents rangés dans une file, installation qui se compose d'une partie femelle (17) et d'une partie mâle (16) susceptible d'être liée à la partie femelle, ainsi qu'un élément de verrouillage (20) qui, en position d'accouplement, assure une liaison solide, mais toutefois amovible de la partie mâle et de la partie femelle, et qui comporte une barrière de déverrouillage (22, 28) déverrouillable qu'à l'aide d'un moyen de déverrouillage (32) particulier, ce moyen de déverrouillage étant bloqué lorsque la partie mâle est séparée de la partie femelle, et n'est de nouveau libérée que lorsque la partie mâle est de nouveau introduite dans une partie femelle, chaque chariot de transport ayant une partie mâle et une partie femelle, prévues solidairement de façon que lors du regroupement des chariots de transport dans une file, une partie mâle fixée respectivement à un chariot de transport, vient en position d'accouplement, dans une partie femelle portée par le chariot de transport adjacent, caractérisée en ce que les parties mâles (16) et les parties femelles (17) comportent des contacts (25, 27) qui, lors du désaccouplement d'une partie mâle d'un chariot de transport (10) et d'une partie femelle d'un autre chariot de transport, relient l'installation à un réseau de courant basse-tension, et le premier chariot de transport d'un ensemble de chariots de transport solidarisés entre eux rangés en file, est relié au réseau basse tension par une partie femelle ou une partie mâle correspondante et en ce que la libération du moyen de verrouillage (32) particulier, après l'accouplement d'un chariot de transport à un autre chariot de transport se trouvant dans la file, ainsi que la manoeuvre de l'élément de verrouillage (20) et/ou d'un verrou (22) bloquant ce dernier en position d'encliquetage, est sorti de sa position d'encliquetage de façon électromagnétique.

2. Installation selon la revendication 1, caractérisée en ce que jusqu'à l'accouplement du chariot de transport (10) correspondant dans la partie femelle (17) d'un chariot de transport rangé et accouplé dans une file, le moyen de déverrouillage (32), particulier, est bloqué par une barrière (35) maintenue en position de blocage par la force d'un ressort et sous l'effet d'une impulsion de tension appliquée à un commutateur magnétique (38), lors de l'accouplement du chariot de transport, cette barrière est, pendant un court instant, sortie de sa position de blocage contre l'effet de la force de ressort, pour venir dans une position de libération permettant la chute du moyen de déverrouillage.

3. Installation selon la revendication 1 ou 2, caractérisée en ce que la manoevre de l'élément de verrouillage (20) et/ou d'un verrou (22) bloquant ce dernier en position d'encliquetage, hors de sa position d'encliquetage ou de sa position de verrouillage, dans une position de déverrouillage permettant de désaccoupler les pièces d'accouplement, se fait à l'aide d'un aimant de manoeuvre (28) auquel est appliquée une tension par la fermeture d'un commutateur (36) à l'aide du moyen de déverrouillage particulier et est ainsi mis en oeuvre.

4. Installation selon la revendication 3, caractérisée en ce que l'élément d'encliquetage est un goujon d'encliquetage (20) mobile transversalement par rapport à l'axe longitudinal de la partie mâle (16) et qui en position d'accouplement, vient dans une cavité d'encliquetage (18) correspondante à la partie femelle (17) et est maintenu dans cette position de prise par un ressort précontraint (21) et le verrou (22) vient derrière le goujon d'encliquetage mobile, en position d'encliquetage, et ne peut être commandé en position de déverroullage que par l'aimant de manoeuvre (28).

5. Installation selon 'une des revendications 1 à 4, caractérisée en ce que sur chaque chariot de transport (10) il est prévu une partie mâle (16) dirigée vers l'avant, dans la direction de déplacement et une partie femelle (17) ouverte vers l'arrière.

**FIG. 1**

**FIG. 2**

**FIG. 3**

FIG. 4